# EUROPEAN PATENT SPECIFICATION

(11) **EP 2 689 944 B1**
(45) Date of publication and mention of the grant of the patent: **09.10.2019**
(21) Application number: 13177446.5
(22) Date of filing: 22.07.2013
(51) Int. Cl.: B60H 1/00, F25D 29/00

(54) **Refrigeration system for transportation**
Kühlsystem für Transportzwecke
Système de réfrigération de transport

(30) Priority: 24.07.2012 JP 2012163782
(43) Date of publication of application: 29.01.2014
(73) Proprietor: MITSUBISHI HEAVY INDUSTRIES THERMAL SYSTEMS, LTD., Tokyo 108-8215 (JP)
(72) Inventor: Kai, Masakazu, TOKYO, 108-8215 (JP)
(74) Representative: Intès, Didier Gérard André

(56) References cited:
- WO-A2-2011/056642
- US-A1- 2008 034 773
- US-A1- 2009 085 400

## Description

### Technical Field

The present invention relates to a so-called sub-engine type refrigeration system for transportation provided with an engine exclusively used to drive a chiller, such as disclosed in WO 2011/056642 A2.

### {Background Art}

As sub-engine type refrigeration systems, for example, PTL 1 discloses a sub-engine type air-conditioning system in which a sub engine is used to drive a compressor, an evaporator fan and the like and to also drive an alternator, and power generated by the alternator is used to charge a battery for an air conditioner, whereby an air-conditioner side electric load including an evaporator fan motor can be driven by power of the battery for an air conditioner while the sub engine is stopped.

PTL 2 discloses a sub-engine type refrigeration system for transportation in which a motor generator and a compressor can be driven by a sub engine, and a chiller-side electric load is driven and a battery is charged by the generated power from the motor generator. In the system, when the compressor is stopped due to reduced refrigeration load, the sub engine continues the operation to charge a battery, and once the battery is charged to a specified value or higher, the sub engine is stopped until the amount of charge in the battery reaches a preset value, and the motor generator is driven by power of the battery so as to drive the compressor and the other electric load and to operate a chiller.

PTL 3 and PTL 4 disclose a chiller for chill vehicles that is configured to drive a chiller-side electrical load by generated power from a generator which is driven by an engine for driving a vehicle, and charge a battery by the generated power from the generator. The chiller-side electric load can be driven by power from the battery when vehicle engine speed drops depending on a vehicle driving condition and an output voltage of the generator is decreased or when the power is not supplied from outside because the engine is stopped.

WO2011056642 (A2) discloses a refrigeration system for a mobile unit and a method for operating the same.

US2009085400 (A1) refers to a single- or dual-inverter auxiliary power conversion apparatus and system and narrow-hysteresis charging method.

US2008034773 (A1) teaches a system for maintaining a selected temperature in a refrigeration unit of a food service vehicle.

### {Citation List}

### Patent Literature

{PTL 1}
   Japanese Unexamined Patent Application, Publication No. 2001-180254
{PTL 2}
   Japanese Unexamined Patent Application, Publication No. 2008-281289
{PTL 3}
   Japanese Unexamined Patent Application, Publication No. Hei 11-4506
{PTL 4}
   The Publication of Japanese Patent No. 4199380

### {Summary of Invention}

### {Technical Problem}

In the invention disclosed in PTL 2, in order to minimize on/off cycles of the sub engine in a low load region and allow the sub engine to operate in a high load region as much as possible, when the amount of charge in the battery is at or above the preset value, the sub engine is stopped and the motor generator is driven by the power of the battery, so that the compressor and the electric load on the chiller side are driven by motive power and generated power from the motor generator, and when the amount of charge in the battery decreases to the preset value or lower, the sub engine is operated and the compressor and the motor generator are driven, so that the battery is charged. However, the invention disclosed in PTL 2 is not intended to maintain the high generation efficiency of the generator with respect to variations of power consumption on the chiller side and improve the energy efficiency of a sub-engine type refrigeration system for transportation.

In the inventions disclosed in PTL 3 and PTL 4, together with the secondary battery, which is charged by power of the generator when the generator has excess output, and discharges when the generator output is insufficient or when the engine for driving a vehicle is stopped to stabilize a power supply circuit, the secondary battery serves as a temporary back-up power supply for when the power generation is insufficient or when the power generation is stopped. However, the inventions disclosed in PTL 3 and PTL 4 are not also intended to improve the energy efficiency of the sub-engine type refrigeration system for transportation by actively using the secondary battery.

The present invention has been made in view of such circumstances, and an object of the present invention is to provide a refrigeration system for transportation in which an AC generator can be operated at a consistently high load factor by controlling the amount of charge in a secondary battery with respect to variations in power consumption on a chiller side, thereby maintaining the high generation efficiency and improving the energy efficiency. Solution to Problem

The invention relates to a sub-engine type refrigeration system for transportation according to claim 1.

A refrigeration system for transportation of the present invention is a sub-engine type refrigeration system for transportation, which includes an engine for driving a chiller and an AC generator driven by the engine, wherein all or part of an electric load of the chiller is driven by power generated by the AC generator. The system includes a secondary battery which is capable of storing the power generated by the AC generator, and a control unit which controls so that, when a state of charge of the secondary battery is at or above a control lower limit value, the engine is stopped and the chiller's electric load is driven by the power of the secondary battery, and when the state of charge of the secondary battery is below the control lower limit value while the chiller's electric load is driven by the power of the secondary battery, the engine is operated and the AC generator starts power generation, whereby the chiller's electric load is driven by the power of the AC generator, and also controls the amount of charge to the secondary battery so as to maintain a load factor of the AC generator substantially at a rated load.

With the configuration described above, a system is provided which can use the secondary battery actively by controlling so that, when the state of charge (SOC) of the secondary battery is above the control lower limit value, the engine is stopped, the chiller's electric load is driven by the power of the secondary battery, thereby improving the energy efficiency. In addition, by controlling so that, when the state of charge (SOC) of the secondary battery is below the control lower limit value, the engine is operated and the AC generator starts power generation, whereby the chiller's electric load is driven by the power of the AC generator, and also controlling the amount of charge to the secondary battery so as to maintain the load factor of the AC generator substantially at a rated load and controlling the amount of charge to the secondary battery with respect to variations in power consumption on the chiller side, the AC generator is operated substantially at a rated load leading to a consistently high load factor, thereby maintaining the generation efficiency substantially at its maximum. Thus, the energy efficiency in the sub-engine type refrigeration system for transportation can be significantly improved by using a secondary battery.

Further, the refrigeration system for transportation of the present invention, according to the above-described refrigeration system for transportation, may include the control unit having a function that when the state of charge of the secondary battery is above a control upper limit value, the operation of the engine is stopped, and the chiller's electric load is driven by the power of the secondary battery until the state of charge of the secondary battery is below the control lower limit value.

With the configuration described above, by controlling so that, when the state of charge (SOC) of the secondary battery is above the control upper limit value, the operation of the engine is stopped, and the chiller's electric load is driven by the power of the secondary battery to operate the chiller until the state of charge of the secondary battery is below the control lower limit value, it is possible to reduce the operating ratio of the engine and the AC generator. In addition, when the engine and the AC generator are operated, each can be operated at a consistently high load factor to achieve high efficient operation. Thus, the energy efficiency can be improved in the sub-engine type refrigeration system for transportation.

Further, the refrigeration system for transportation of the present invention includes the control unit having a function of controlling so that, when the state of charge of the secondary battery is below the control lower limit value while the chiller's electric load is driven by the power of the secondary battery, the engine is operated and the AC generator starts power generation, whereby the chiller's electric load is driven by the generated power from the AC generator, and also controlling the load factor of the engine to 70 to 100% to drive the AC generator. According to the invention the amount of charge to the secondary battery is variably controlled in accordance with variations in power consumption on the chiller side.

With the configuration described above, when the engine is operated to generate power by the AC generator, the load factor of the engine is always controlled to 70 to 100%, and the load factor of the AC generator is maintained substantially at a rated load to thereby achieve the operation at high load factor. Thus, it is possible to maintain the generation efficiency substantially at its maximum and improve the energy efficiency in the sub-engine type refrigeration system for transportation.

Further, the refrigeration system for transportation of the present invention, according to any of the above-described refrigeration systems for transportation, may include the control unit having a function that operable time of the chiller by the secondary battery is calculated on the basis of a detection value of power consumption by the chiller's electric load, and when the operable time of the chiller is at a predetermined time or larger, the driving of the chiller's electric load is switched to the driving by the power of the secondary battery even when the secondary battery is being charge-controlled.

With the configuration described above, the operable time of the chiller by the secondary battery is calculated on the basis of power consumption of the chiller-side electric load, and when the operable time of the chiller is at a predetermined time or larger, the operation of the engine is stopped, and the driving of the chiller-side electric load is switched to the driving by the power of the secondary battery even when the secondary battery is being charge-controlled, to thereby further reduce the operating ratio of the engine and the AC generator. Thus, the operating ratio by the secondary battery can be increased, and the energy efficiency in the refrigeration system for transportation can be further improved.

Further, the refrigeration system for transportation of the present invention, according to any of the above-described refrigeration systems for transportation, may include the secondary battery configured to be capable of being charged not only by power generated by the AC generator but also by power from an external AC power supply, and configured to disconnect an output circuit of the AC generator when the system is connected with the external AC power supply.

With the configuration described above, even under the situation that a vehicle equipped with a chiller is being parked and the sub engine cannot be operated, if other external AC power supplies such as a commercial power supply are available, the chiller can be operated while the secondary battery is charged, by connecting the external AC power supply and disconnecting the output circuit of the AC generator. Thus, even under the situation that the engine and the AC generator are stopped, the chiller can be operated and the secondary battery can be charged.

Further, the refrigeration system for transportation of the present invention, according to any of the above-described refrigeration systems for transportation, may be configured to disconnect the secondary battery from a utility grid and always drive the AC generator by the engine when the failure of the secondary battery occurs, so that the operation of the system is switchable to drive the chiller's electric load by the generated power from the AC generator.

With the configuration described above, even in the event of failure of the secondary battery, the secondary battery is disconnected from the utility grid, the AC generator is always driven by the engine, whereby the chiller's electric load can be driven by the generated power from the AC generator to operate the chiller. Thus, the chiller can be normally operated in spite of the failure of the secondary battery. By adopting such a configuration, it can be selected whether or not a combination with the secondary battery is used. A highly versatile system may be provided which may be also applied to a sub-engine type refrigeration system for transportation which is not equipped with the secondary battery and drives the chiller's electric load by always driving the AC generator by the engine.

### Advantageous Effects of Invention

According to the present invention, the system is provided which can use the secondary battery actively by controlling so that, when the state of charge (SOC) of the secondary battery is above the control lower limit value, the engine is stopped, the chiller's electric load is driven by the power of the secondary battery, thereby improving the energy efficiency. In addition, by controlling so that, when the state of charge of the secondary battery is below the control lower limit value, the engine is operated and the AC generator starts power generation, whereby the chiller's electric load is driven by the power of the AC generator, and also controlling the amount of charge to the secondary battery so as to maintain the load factor of the AC generator substantially at a rated load, and controlling the amount of charge to the secondary battery with respect to variations in power consumption on the chiller side, AC generator is operated substantially at a rated load leading to a consistently high load factor and the generation efficiency is maintained substantially at its maximum. Thus, the energy efficiency in the sub-engine type refrigeration system for transportation can be significantly improved by using a secondary battery.

### Brief Description of Drawings

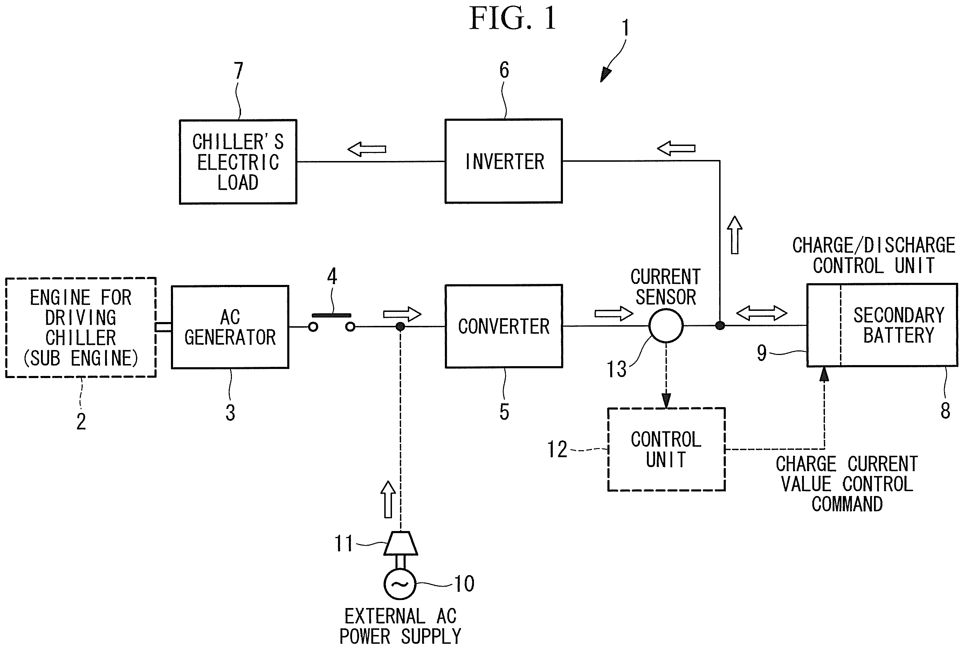

{Fig. 1}
   Fig. 1 is an electrical schematic diagram of a refrigeration system for transportation according to an embodiment of the present invention.
{Fig. 2}
   Fig. 2 is an electrical schematic diagram illustrating a control state when a chiller-side electric load is large in the refrigeration system for transportation shown in Fig. 1.
{Fig. 3}
   Fig. 3 is an electrical schematic diagram illustrating a control state when a chiller-side electric load is small in the refrigeration system for transportation shown in Fig. 1.

### Description of Embodiments

Hereinafter, an embodiment of the present invention will be described with reference to Fig. 1 to Fig. 3.

Fig. 1 shows an electrical schematic diagram of a sub-engine type refrigeration system for transportation according to an embodiment of the present invention.

A refrigeration system for transportation 1 of the present embodiment is a sub-engine type refrigeration system for transportation 1 provided with an engine exclusively used to drive a chiller (hereafter referred to as "sub engine") 2, and includes an AC generator 3 driven by the sub engine 2. The AC generator 3 is driven by the sub engine 2 and generates three-phase AC power. Since the sub engine 2 and the AC generator 3 are generally designed to achieve the highest efficient operation substantially at a rated load, stable operation substantially at a rated load contributes to improvement in generation efficiency and overall energy efficiency.

An output side of the AC generator 3 is connected to a converter 5 via a contact point 4. The converter 5 is an AC/DC converter and includes a rectifier circuit, an electric power conversion system, or the like which converts AC power to DC power. A configuration is adopted in which the power converted from AC to DC by the converter 5 is applied to a chiller-side electric load 7 including a motor compressor, a condenser fan motor, an evaporator fan motor, and the like via an inverter 6. The inverter 6 converts DC power from the converter 5 to three-phase AC power of a command frequency corresponding to a refrigeration load to apply to the electric load 7.

The refrigeration system for transportation 1 also includes a secondary battery 8 that stores power which is generated by the AC generator 3 and then converted from the AC to DC through the converter 5. It is assumed that the secondary battery 8 has capacity enough to operate the chiller's electric load 7 only by the power charged therein over a considerable period of time once a state of charge (SOC) is above a control upper limit value. The secondary battery 8 for a chiller is configured to be capable of being charged, via a charge/discharge control unit 9, by the remainder of DC power converted through the converter 5 after part of the power is consumed on the chiller-side. A configuration is adopted in which the power stored in the secondary battery 8 is discharged via the charge/discharge control unit 9, converted to three-phase AC power through the inverter 6, and applied to the chiller's electric load 7 when the sub engine 2 is stopped.

A power supply plug 11, which is connectable with an external AC power supply 10 such as a commercial power supply, is provided between the converter 5 and the contact point 4. Thus, a configuration is adopted in which, by connecting the power supply plug 11 to the external AC power supply 10, power from the external AC power supply 10 enables operation of the chiller (electric load 7) and charging of the secondary battery 8 even when the sub engine 2 and the AC generator 3 are stopped. An output circuit is adapted to be disconnected from the AC generator 3 by the contact point 4 when this external AC power supply 10 is used for operation.

The refrigeration system for transportation 1 further includes a control unit 12 that has a function of maintaining and controlling the generation efficiency substantially at its maximum by controlling start and stop of the sub engine 2 and the AC generator 3 in accordance with the state of charge (SOC) of the secondary battery 8, and controlling the amount of charge to the secondary battery 8 to control the sub engine 2 and the AC generator 3 so that they can operate at a consistently high load factor (for example, substantially at a rated load) when the sub engine 2 and the AC generator 3 are operated.

That is, the control unit 12 has the function of controlling so that, on the basis of a detection value and other values from a current sensor 13, when the state of charge (SOC) of the secondary battery 8 is at or above the control lower limit value, the sub engine 2 is stopped and the chiller's electric load 7 is driven by the power of the secondary battery 8, and when the state of charge (SOC) of the secondary battery 8 is below the control lower limit value while the chiller's electric load 7 is driven by the power of the secondary battery 8, the sub engine 2 is operated and the AC generator 3 starts power generation, whereby the chiller's electric load 7 is driven by the power generated from the AC generator 3, and also controlling the amount of charge to the secondary battery 8 so that the load factor of the AC generator 3 is stabilized substantially at a rated load.

In addition to the above functions, the control unit 12 has the following functions.
(1) When the secondary battery 8 is charged and the state of charge (SOC) thereof is above a control upper limit value, the operation of the sub engine 2 is stopped, and subsequently, the chiller's electric load 7 is driven by the power of the secondary battery 8 until the state of charge (SOC) of the secondary battery 8 is below the control lower limit value.
(2) When the state of charge of the secondary battery 8 is below the control lower limit value while the chiller's electric load 7 is driven by the power of the secondary battery 8, the sub engine 2 is operated and the AC generator 3 starts power generation, whereby the chiller's electric load 7 is driven by the generated power from the AC generator 3, in addition, the load factor of the sub engine 2 is controlled to 70 to 100% to drive the AC generator 3, and the amount of charge to the secondary battery 8 is variably controlled in accordance with variations in power consumption by the chiller's electric load 7.
(3) A detection value of power consumption by the chiller's electric load 7 is used to calculate the operable time of the chiller by the power of the secondary battery 8. When the operable time of the chiller is at a predetermined time or larger, while the secondary battery 8 is charge-controlled, that is, the sub engine 2 and the AC generator 3 are operated and the chiller's electric load 7 is driven by the generated power from the AC generator 3, and, even when the secondary battery 8 is being charged, the driving of the chiller's electric load 7 is switched to the driving by the secondary battery 8.
(4) When the failure of the secondary battery 8 occurs, the secondary battery 8 is disconnected from a utility grid, and the AC generator 3 is always driven by the sub engine 2 to switch the driving of the chiller's electric load 7 to the driving by the generated power from the AC generator 3.

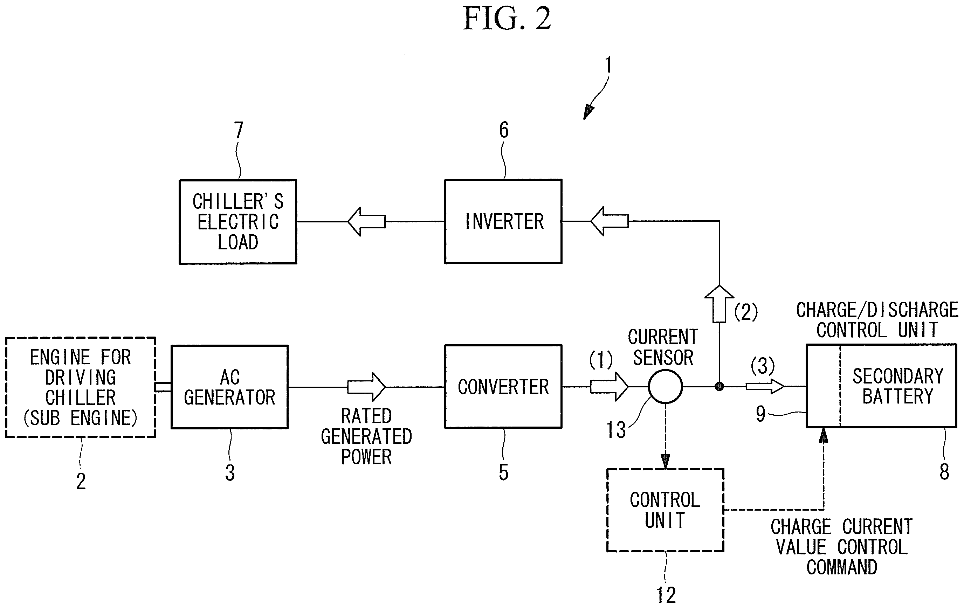

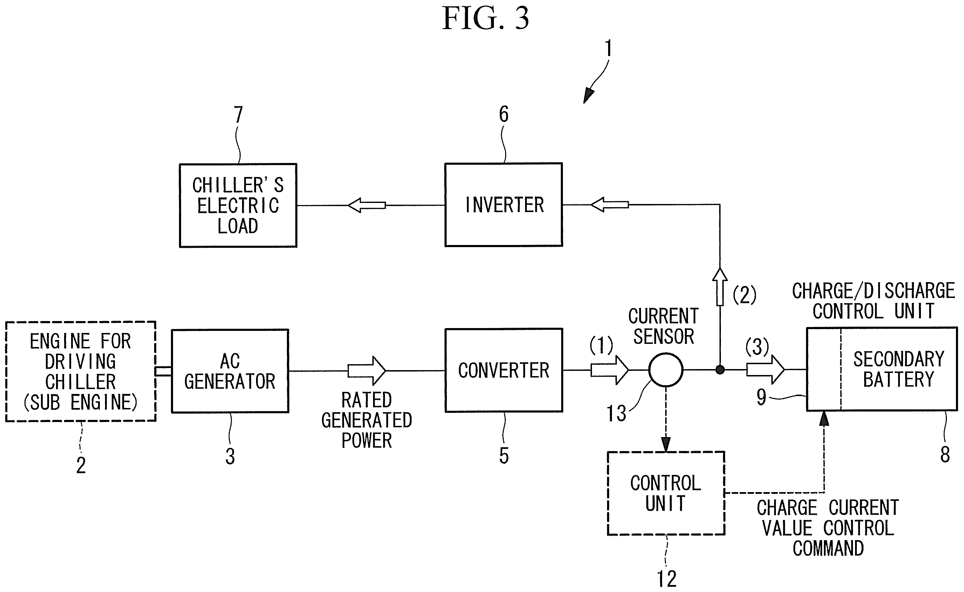

In operating the refrigeration system for transportation 1, the control unit 12 uses the secondary battery 8 actively by the above-described functions, and controls the charge and discharge thereof so that the operating ratio of the sub engine 2 and the AC generator 3 is minimized. When the sub engine 2 and the AC generator 3 are operated, the control unit 12 also controls a charge current (3) to the secondary battery 8 so that a current value (1) detected by the current sensor 13 indicates a current value (1) at which generation efficiency by the AC generator 3 becomes high, as shown in Fig. 2 and Fig. 3. That is, while controlling the current value (1) of generated power from the AC generator 3 to stabilize at a high constant value, the control unit 12 controls the charge current (3) to establish "(1) - (2) = (3).", where (2) represents power consumption by the electric load 7.

According to the present embodiment, the following operations and effects are attained.

The sub-engine type refrigeration system for transportation 1 according to the present embodiment includes the secondary battery 8 which is capable of storing the power generated by the AC generator 3 driven by the sub engine 2. The control unit 12 therefor controls so that, when the state of charge (SOC) of the secondary battery 8 is at or above the control lower limit value, the sub engine 2 is stopped and the chiller's electric load 7 is driven by the power of the secondary battery 8, and when the state of charge (SOC) of the secondary battery 8 is below the control lower limit value while the chiller's electric load 7 is driven by the power of the secondary battery 8, the sub engine 2 is operated and the AC generator 3 starts power generation, whereby the chiller's electric load 7 is driven by the power of the AC generator 3, and also controls the amount of charge to the secondary battery 8 so that the load factor of the AC generator 3 becomes a high load factor substantially at a rated load.

Thus, the system is configured to be able to use the secondary battery 8 actively by controlling so that, when the state of charge (SOC) of the secondary battery 8 is above the control lower limit value, the sub engine 2 is stopped and the chiller's electric load 7 is driven by the power of the secondary battery 8, thereby improving the energy efficiency. When the state of charge (SOC) of the secondary battery 8 is below the control lower limit value, the sub engine 2 is operated and the AC generator 3 starts power generation, whereby the chiller's electric load 7 is driven by the generated power from the AC generator 3. In addition, the amount of charge to the secondary battery 8 is controlled so that the load factor of the AC generator 3 is stabilized substantially at a rated load, and the amount of charge to the secondary battery 8 is controlled with respect to variations in power consumption on the chiller side. Then, the AC generator 3 is operated substantially at a rated load leading to a consistently high load factor, thereby maintaining the generation efficiency substantially at its maximum.

Therefore, while keeping the operating ratio of the sub engine 2 and the AC generator 3 low, the AC generator 3 and the sub engine 2 can be operated with the generation efficiency maintained substantially at its maximum, and thus, the energy efficiency in the sub-engine type refrigeration system for transportation 1 can be significantly improved by using the secondary battery 8.

When the sub engine 2 and the AC generator 3 are operated and the state of charge (SOC) of the secondary battery 8 is above the control upper limit value while the secondary battery 8 is charge-controlled by the power of the AC generator 3, the operation of the sub engine 2 is stopped, and then the chiller's electric load 7 is driven by the power of the secondary battery 8 until the state of charge (SOC) of the secondary battery 8 is below the control lower limit value.

When the state of charge (SOC) of the secondary battery 8 is thus above the control upper limit value, the operation of the sub engine 2 is stopped, and the chiller's electric load 7 is driven by the power stored in the secondary battery 8 to operate the chiller until the state of charge (SOC) of the secondary battery 8 is below the control lower limit value, to thereby reduce the operating ratio of the sub engine 2 and the AC generator 3. When the sub engine 2 and the AC generator 3 are operated, each can be operated at a consistently high load factor to achieve high efficient operation. Therefore, this may provide improvement in the energy efficiency in the sub-engine type refrigeration system for transportation 1.

In the present embodiment, when the state of charge (SOC) of the secondary battery 8 is below the control lower limit value while the chiller's electric load 7 is driven by the power of the secondary battery 8, the sub engine 2 is operated and the AC generator 3 starts power generation, whereby the chiller's electric load 7 is driven by the generated power from the AC generator 3. In addition, the load factor of the sub engine 2 is controlled to 70 to 100% to drive the AC generator 3, and the amount of charge to the secondary battery 8 is variably controlled in accordance with variations in power consumption on the chiller side as indicated by (2) and (3) shown in Fig. 2 and Fig. 3.

In this way, the load factor of the sub engine 2 can be always controlled to 70 to 100% when the sub engine 2 is operated to generate the power by the AC generator 3, to thereby maintain the load factor of the AC generator 3 substantially at a rated load and achieve the stable operation at a high load factor. As a result, it is possible to maintain the generation efficiency substantially at its maximum and improve the energy efficiency in the sub-engine type refrigeration system for transportation 1.

In the present embodiment, the operable time of the chiller by the secondary battery 8 is calculated on the basis of a detection value of the power consumption by the chiller's electric load 7. When the operable time of the chiller is at a predetermined time or larger, the driving of the chiller's electric load 7 is switched to the driving by the power of the secondary battery 8 even when the secondary battery 8 is being charge-controlled. Thus, the operable time of the chiller by the secondary battery 8 is calculated on the basis of the power consumption of the chiller-side electric load 7, when the operable time of the chiller is at a predetermined time or larger, the operation of the sub engine 2 is stopped even when the secondary battery 8 is being charge-controlled, and the driving of the chiller-side electric load 7 is switched to the driving by the power of the secondary battery 8, to thereby further reduce the operating ratio of the sub engine 2 and the AC generator 3.

Therefore, the operating ratio by the secondary battery 8 is increased, and the energy efficiency in the refrigeration system for transportation 1 can be further improved. The operable time of the chiller by the secondary battery 8 may be calculated by division between power consumption per unit time by the chiller's electric load 7 and the electric power stored in the secondary battery 8.

The secondary battery 8 is configured to be capable of being charged not only by the power generated by the AC generator 3, but also by the power from the external AC power supply 10 by stopping the sub engine 2 and connecting the power supply plug 11 to the external AC power supply 10, and is configured to disconnect the output circuit of the AC generator 3 by the contact point 4 when the power supply plug 11 is connected with the external AC power supply 10. This enables the chiller to be operated while the secondary battery 8 is being charged by connecting the power supply plug 11 to other external AC power supply 10 such as a commercial power supply if available and disconnecting the output circuit of the AC generator 3 even in the situation that a vehicle equipped with a chiller is being parked and the sub engine 2 cannot be operated. Accordingly, the chiller can be operated and the secondary battery 8 can be charged even in the situation that the sub engine 2 and the AC generator 3 are stopped.

In the present embodiment, when the failure of the secondary battery 8 occurs, the secondary battery 8 is disconnected from the utility grid and the AC generator 3 is always driven by the sub engine 2, so that the operation of the system is switchable to drive the chiller's electric load 7 by the generated power from the AC generator 3. Thus, even in the event of failure of the secondary battery 8, the chiller can be operated by disconnecting secondary battery 8 from the utility grid, always driving the AC generator 3 by the sub engine 2 and driving the chiller's electric load 7 by power generated from the AC generator 3. Therefore, the chiller can be normally operated in spite of the failure of the secondary battery 8.

By adopting a configuration in which the secondary battery 8 can be disconnected from the utility grid as described above, it can be selected whether or not to use in combination with the secondary battery 8. A highly versatile system may be provided which may be also applied to a sub-engine type refrigeration system for transportation which is not equipped with the secondary battery 8 and drives the chiller's electric load 7 by always driving the AC generator 3 by the sub engine 2.

The present invention is not limited to the invention according to the above-described embodiment, but may be appropriately modified. For example, in the above-described embodiment, a connection between the sub engine 2 and the AC generator 3 can be either a directly-connected structure or connection via a centrifugal clutch. As the chiller's electric load 7, a motor compressor, a condenser fan motor, an evaporator fan motor, and the like are exemplified, but the other electric load may be included therein, or any of these electric loads may be exempted therefrom.

### Reference Signs List

- 1: Refrigeration system for transportation
- 2: Engine (sub engine)
- 3: AC generator
- 4: Contact point
- 5: Converter
- 6: Inverter
- 7: Chiller's electric load
- 8: Secondary battery
- 9: Charge/discharge control unit
- 10: External AC power supply
- 11: Power supply plug
- 12: Control unit
- 13: Current sensor

## Claims

1. A sub-engine type refrigeration system for transportation including
an engine (2) for driving a chiller, and
an AC generator (3) driven by the engine (2),
wherein all or part of an electric load (7) of the chiller is driven by power generated by the AC generator (3), the system comprising:
a secondary battery (8) which is capable of storing the power generated by the AC generator (3), and
a control unit (12) which controls so that, when a state of charge of the secondary battery (8) is at or above a control lower limit value, the engine (2) is stopped and the chiller's electric load (7) is driven by power of the secondary battery (8),
and when the state of charge of the secondary battery (8) is below the control lower limit value while the chiller's electric load (7) is driven by the power of the secondary battery, the engine (2) is operated and the AC generator (3) starts power generation, whereby the chiller's electric load (7) is driven by the power of the AC generator (3), and **characterised in that** the control unit (12) also controls an amount of charge to the secondary battery (8) so as to maintain a load factor of the AC generator (3) substantially at a rated load,
wherein the control unit (12) has a function of controlling so that, when the state of charge of the secondary battery (8) is below the control lower limit value while the chiller's electric load (7) is driven by the power of the secondary battery (8), the engine (2) is operated and the AC generator (3) starts power generation, whereby the chiller's electric load (7) is driven by the generated power from the AC generator (3), and also controlling a load factor of the engine (2) to 70 to 100% to drive the AC generator (3) and variably controlling the amount of charge to the secondary battery (8) in accordance with variations in power consumption on the chiller side.

2. The refrigeration system for transportation according to claim 1,
wherein the control unit (12) has a function that when the state of charge of the secondary battery (8) is above a control upper limit value, an operation of the engine (2) is stopped and the chiller's electric load (7) is driven by the power of the secondary battery (8) until the state of charge of the secondary battery (8) is below the control lower limit value.

3. The refrigeration system for transportation according to any one of claims 1 to 2,
wherein the control unit (12) has a function that operable time of the chiller by the secondary battery (8) is calculated on a basis of a detection value of power consumption by the chiller's electric load (7), and when the operable time of the chiller is at a predetermined time or larger, driving of the chiller's electric load (7) is switched to driving by the power of the secondary battery (8) even when the secondary battery is being charge-controlled.

4. The refrigeration system for transportation according to any one of claims 1 to 3,
wherein the secondary battery (8) is configured to be capable of being charged not only by power generated by the AC generator (3) but also by power from an external AC power supply, and configured to disconnect an output circuit of the AC generator (3) when the system is connected with the external AC power supply (10).

5. The refrigeration system for transportation according to any one of claims 1 to 4, configured to disconnect the secondary battery (8) from a utility grid and always drive the AC generator (3) by the engine (2) so that an operation of the system is switchable to drive the chiller's electric load (7) by generated power from the AC generator (3), when a failure of the secondary battery (8) occurs.

## Patentansprüche

1. Submotor-Kühlsystem für Transportzwecke, das einen Motor (2) zum Antreiben eines Kühlaggregats und einen vom Motor (2) angetriebenen Wechselstromgenerator (3) aufweist,
wobei die gesamte oder ein Teil einer elektrischen Belastung (7) des Kühlaggregats durch vom Wechselstromgenerator (3) erzeugten Strom angetrieben wird, wobei das System Folgendes umfasst:
eine Sekundärbatterie (8), die die vom Wechselstromgenerator (3) erzeugte Energie speichern kann, und
eine Steuereinheit (12), die dafür sorgt, dass, wenn ein Ladezustand der Sekundärbatterie (8) bei oder über einem unteren Steuergrenzwert liegt, der Motor (2) gestoppt wird und die elektrische Belastung (7) des Kühlaggregats durch die Energie der Sekundärbatterie (8) angetrieben wird,
und
wenn der Ladezustand der Sekundärbatterie (8) unter dem unteren Steuergrenzwert liegt, während die elektrische Last (7) des Kühlaggregats durch die Energie der Sekundärbatterie angetrieben wird, der Motor (2) betrieben wird und der Wechselstromgenerator (3) mit der Stromerzeugung beginnt, wobei die elektrische Belastung (7) des Kühlaggregats durch die Energie des Wechselstromgenerators (3) angetrieben wird, und **dadurch gekennzeichnet, dass** die Steuereinheit (12) auch eine Ladungsmenge für die Sekundärbatterie (8) steuert, um einen Lastfaktor des Wechselstromgenerators (3) im Wesentlichen bei einer Nennlast zu halten,
wobei die Steuereinheit (12) eine Funktion zum Steuern hat, so dass, wenn der Ladezustand der Sekundärbatterie (8) unter dem unteren Steuergrenzwert liegt, während die elektrische Belastung (7) des Kühlaggregats durch die Energie der Sekundärbatterie (8) angetrieben wird, der Motor (2) betrieben wird und der Wechselstromgenerator (3) die Stromerzeugung startet, wobei die elektrische Belastung (7) des Kühlaggregats durch die erzeugte Energie des Wechselstromgenerators (3) angetrieben wird, und auch zum Steuern eines Lastfaktors des Motors (2) auf 70 bis 100 % hat, um den Wechselstromgenerator (3) anzutreiben, und variables Steuern der Ladungsmenge der Sekundärbatterie (8) gemäß den Schwankungen des Stromverbrauchs seitens des Kühlaggregats.

2. Kühlsystem für Transportzwecke nach Anspruch 1,
wobei die Steuereinheit (12) eine Funktion hat, dass, wenn der Ladezustand der Sekundärbatterie (8) über einem oberen Steuergrenzwert liegt, der Betrieb des Motors (2) gestoppt wird und die elektrische Belastung (7) des Kühlaggregats durch die Energie der Sekundärbatterie (8) angetrieben wird, bis der Ladezustand der Sekundärbatterie (8) unter dem unteren Steuergrenzwert liegt.

3. Kühlsystem für Transportzwecke nach einem beliebigen der vorstehenden Ansprüche 1 bis 2,
wobei die Steuereinheit (12) eine Funktion aufweist, dass die Betriebszeit des Kühlaggregats durch die Sekundärbatterie (8) auf der Grundlage eines Erkennungswerts des Stromverbrauchs durch die elektrische Belastung (7) des Kühlaggregats berechnet wird, und wenn die Betriebszeit des Kühlaggregats zu einer vorbestimmten Zeit oder größer ist, der Antrieb der elektrischen Belastung (7) des Kühlaggregats auf den Antrieb durch die Energie der Sekundärbatterie (8) umgeschaltet wird, auch wenn die Sekundärbatterie lastgesteuert ist.

4. Kühlsystem für Transportzwecke nach einem beliebigen der vorstehenden Ansprüche 1 bis 3,
wobei die Sekundärbatterie (8) so konfiguriert ist, dass sie nicht nur durch vom Wechselstromgenerator (3) erzeugte Energie, sondern auch durch Energie von einer externen Wechselstromversorgung geladen werden kann und so konfiguriert ist, dass sie einen Ausgangsstromkreis des Wechselstromgenerators (3) abtrennt, wenn das System mit der externen Wechselstromversorgung (10) verbunden ist.

5. Kühlsystem für Transportzwecke nach einem beliebigen der vorstehenden Ansprüche 1 bis 4, das so konfiguriert ist, dass die Sekundärbatterie (8) vom Versorgungsnetz getrennt und der Wechselstromgenerator (3) immer durch den Motor (2) angetrieben wird, so dass ein Betrieb des Systems schaltbar ist, um die elektrische Belastung (7) des Kühlaggregats durch vom Wechselstromgenerator (3) erzeugte Energie anzutreiben, wenn ein Ausfall der Sekundärbatterie (8) eintritt.

## Revendications

1. Système frigorifique de transport du type à sous-moteur, comportant :
un moteur (2) destiné à entraîner un refroidisseur, et
un générateur de courant alternatif (3) entraîné par le moteur (2),
dans lequel une charge électrique (7) du refroidisseur est entraînée en tout ou partie par l'énergie engendrée par le générateur de courant alternatif (3), le système comprenant :
une batterie rechargeable (8) qui est apte à stocker l'énergie engendrée par le générateur de courant alternatif (3), et
une unité de commande (12) qui assure la commande de manière que lorsqu'un état de charge de la batterie rechargeable (8) est supérieur ou égal à une valeur limite inférieure de commande, le moteur (2) soit arrêté et la charge électrique du refroidisseur (7) soit entraînée par l'énergie de la batterie rechargeable (8), et que lorsque l'état de charge de la batterie rechargeable (8) est inférieur à la valeur limite inférieure de commande, tandis que la charge électrique du refroidisseur (7) est entraînée par l'énergie de la batterie rechargeable, le moteur (2) soit mis en marche et le générateur de courant alternatif (3) démarre la production d'énergie, de sorte que la charge électrique du refroidisseur (7) soit entraînée par l'énergie du générateur de courant alternatif (3), et **caractérisé en ce que** l'unité de commande (12) régule également une quantité de charge de la batterie rechargeable (8) de manière à maintenir un facteur de charge du générateur de courant alternatif (3) sensiblement à une charge assignée,
dans lequel l'unité de commande (12) a une fonction consistant à assurer la commande de manière que lorsque l'état de charge de la batterie rechargeable (8) est inférieur à la valeur limite inférieure de commande, tandis que la charge électrique du refroidisseur (7) est entraînée par l'énergie de la batterie rechargeable (8), le moteur (2) soit mis en marche et le générateur de courant alternatif (3) démarre la production d'énergie, de sorte que la charge électrique du refroidisseur (7) soit entraînée par l'énergie engendrée par le générateur de courant alternatif (3), et consistant également à réguler un facteur de charge du moteur (2) entre 70 et 100 % pour entraîner le générateur de courant alternatif (3) et à réguler de manière variable la quantité de charge destinée à la batterie rechargeable (8) en fonction de variations de la consommation d'énergie du côté refroidisseur.

2. Système frigorifique de transport selon la revendication 1, dans lequel l'unité de commande (12) possède une fonction selon laquelle lorsque l'état de charge de la batterie rechargeable (8) est supérieur à une valeur limite supérieure de commande, un fonctionnement du moteur (2) est arrêté et la charge électrique du refroidisseur (7) est entraînée par l'énergie de la batterie rechargeable (8) jusqu'à ce que l'état de charge de la batterie rechargeable (8) soit inférieur à la valeur limite inférieure de commande.

3. Système frigorifique de transport selon l'une quelconque des revendications 1 et 2,
dans lequel l'unité de commande (12) possède une fonction selon laquelle le temps de fonctionnement du refroidisseur sur la batterie rechargeable (8) est calculé sur la base d'une valeur de détection de la consommation d'énergie par la charge électrique du refroidisseur (7), et lorsque le temps de fonctionnement du refroidisseur est supérieur ou égal à un temps prédéterminé, l'entraînement de la charge électrique du refroidisseur (7) est commuté sur un entraînement par l'énergie de la batterie rechargeable (8) même lorsque la batterie rechargeable est soumise à une régulation de charge.

4. Système frigorifique de transport selon l'une quelconque des revendications 1 à 3,
dans lequel la batterie rechargeable (8) est conçue pour être apte à être chargée non seulement par l'énergie engendrée par le générateur de courant alternatif (3), mais aussi par l'énergie provenant d'une alimentation en courant alternatif externe, et est conçue pour déconnecter un circuit de sortie du générateur de courant alternatif (3) lorsque le système est connecté à l'alimentation en courant alternatif externe (10).

5. Système frigorifique de transport selon l'une quelconque des revendications 1 à 4, conçu pour déconnecter la batterie rechargeable (8) d'un réseau public et faire que le générateur de courant alternatif (3) soit toujours entraîné par le moteur (2) de manière qu'un fonctionnement du système puisse être commuté pour que la charge électrique du refroidisseur (7) soit entraînée par l'énergie engendrée par le générateur de courant alternatif (3), lorsque survient une défaillance de la batterie rechargeable (8).
